# EUROPEAN PATENT APPLICATION

(11) **EP 1 681 482 A2**
(43) Date of publication of application: **19.07.2006**
(21) Application number: 06250234.9
(22) Date of filing: 17.01.2006
(51) Int. Cl.: F16D 3/58

(54) **Marine elastic coupling**

(30) Priority: 18.01.2005 JP 2005010486
(71) Applicant: KANZAKI KOKYUKOKI MFG. CO., LTD., Amagasaki-Shi, Hyogo-Ken (JP)
(72) Inventor: Nakagawa, Shigeakia, Kanzaki Kokyukoki Mfg Co Ltd, Amagasaki-shi Hyogo-ken (JP); Imanaka, Toshio, Kanzaki Kokyukoki Mfg Co Ltd, Amagasaki-shi Hyogo-ken (JP)
(74) Representative: Haley, Stephen

(57) **Abstract**

An object of the present invention is to provide improved torsional rigidity of an elastic coupling for use in a marine engine which couples an engine to a reversing gear. The elastic coupling (3) comprises at least one low-rigidity element (8) providing torsional rigidity during transmission of a predetermined low torque; and at least one high-rigidity element (21) providing, during transmission of a predetermined high torque, torsional rigidity higher than that provided by the low-rigidity element.

## Description

The present invention relates to a marine elastic coupling which transmits engine power to the propeller of a vessel.

An engine mounted in a vessel such as a pleasure boat, fishing boat, etc. is connected, via a flywheel arranged concentrically with a drive shaft and a coupling such as an elastic coupling (see, for example, JP 1995-35150 A and US 6244964), to a marine gear which in turn is connected to a propeller shaft. Engine output is thus transmitted via the drive shaft, flywheel, elastic coupling, and marine gear to the propeller shaft, all of which constitute a marine drive system (see, for example, US 4679673).

The elastic coupling serves to absorb the shock caused by torque variations when the engine is used by frequently repeating forward and reverse rotations at low speeds, e.g., when a boat leaves or reaches the shore. The elastic coupling thus reduces noise caused by the reversing gear or the like to provide a comfortable ride in the boat.

Conventional elastic couplings have low torsional rigidity for the purpose of absorbing torque variations induced at low torque. Therefore, with a conventional elastic coupling, resonance phenomena is likely to occur because of the low torsional rigidity during transmission of a high torque, e.g. , high-rotation torque needed when a boat travels at high speeds. This causes abnormal vibrations during high-speed travel to cause damage or failure of the mechanism or various components of the drive system.

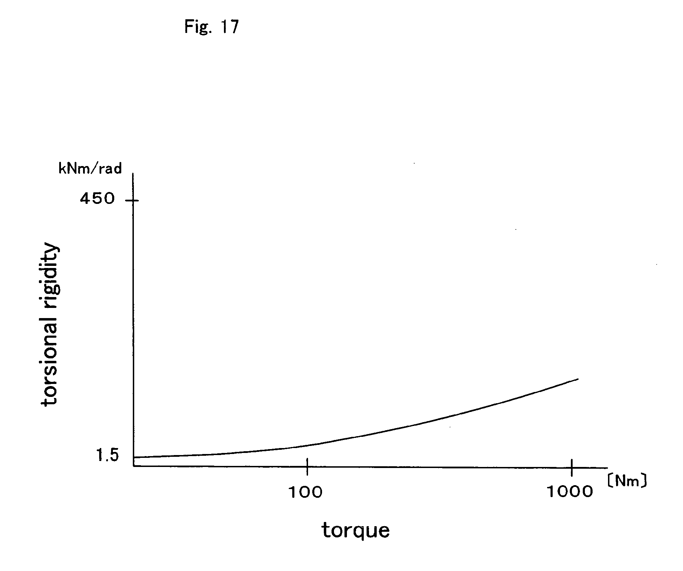

It is possible to increase the torsional rigidity of such an elastic coupling with increasing torque. However, for example, as indicated by the graph of FIG.17 showing the correlation between torsional rigidity and torque, the increases in the torsional rigidity are not high enough to sufficiently reduce the resonance phenomena in the propeller transmission system during high-speed travel.

In order to overcome the aforementioned prior art problems, an object of the present invention is to improve the torsional rigidity of an elastic coupling which couples an engine to a gear.

To achieve the aforementioned object, the present invention provides, as a first invention, an elastic coupling for use in a marine internal combustion engine, the elastic coupling being configured to transmit power from an engine to a propeller through one or a plurality of elastic bodies, the elastic coupling comprising at least one low-rigidity element providing torsional rigidity during transmission of a predetermined low torque; and at least one high-rigidity element providing, during transmission of a predetermined high torque, torsional rigidity higher than the torsional rigidity provided by the low-rigidity element.

The elastic coupling is configured such that the torsional rigidity thereof increases with increasing torque, wherein the increase in the torsional rigidity provided by the high-rigidity element is preferably not less than 30 times greater than the increase in torsional rigidity provided by the low-rigidity element.

The torsional rigidity of the elastic coupling increases, during transmission of the high torque, to near the proportional limit of the elastic coupling. The elastic coupling is thus unlikely to undergo torsional deformation when transmitting a high torque. In this case, the torsional rigidity of the elastic coupling during high-torque transmission is preferably not less than 100 times greater than the torsional rigidity during low-torque transmission; and more preferably not less than 300 times greater than the torsional rigidity during low-torque transmission.

As a second invention, the invention provides a marine elastic coupling which is configured to transmit power from an engine to a propeller through a plurality of elastic bodies, the elastic coupling comprising an outer wheel whose inner periphery is provided with a plurality of first concave portions; and an inner wheel coaxially supported inside the outer wheel, and whose outer periphery is provided with a plurality of second concave portions corresponding to the plurality of first concave portions, wherein each of the elastic bodies is accommodated in a space defined by one of the first concave portions and one of the second concave portions opposing each other, and at least one of the elastic bodies includes a hard material member embedded therein.

As a third invention, the present invention provides a marine elastic coupling configured to transmit power from an engine to a propeller through a plurality of elastic bodies, the elastic coupling comprising an outer wheel; and an inner wheel coaxially supported inside the outer wheel, wherein each elastic body is secured to one of the outer wheel and inner wheel, and accommodated in a concave portion formed in the other one of the inner wheel and outer wheel, and at least one of the elastic bodies includes a hard material member embedded therein.

Alternatively, two or more hard material members differing in rigidity may be embedded concentrically inside each of the elastic bodies. The torsional rigidity of the elastic coupling can be varied according to the combination of these two or more hard material members having different rigidities.

As a fourth invention, the present invention provides a marine elastic coupling configured to transmit power from an engine to a propeller through a plurality of elastic bodies, the elastic coupling comprising an outer wheel whose inner periphery is provided with a plurality of first concave portions; and an inner wheel coaxially supported inside the outer wheel, and whose outer periphery is provided with a plurality of second concave portions corresponding to the plurality of first concave portions, wherein each of the elastic bodies is accommodated in a space defined by one of the first concave portions and one of the second concave portions opposing each other, and is formed by connecting two or more parts made of different materials.

As a fifth invention, the present invention provides a marine elastic coupling configured to transmit power from an engine to a propeller through a plurality of elastic bodies, the elastic coupling comprising an outer wheel; and an inner wheel coaxially supported inside the outer wheel, wherein each elastic body is secured to one of the outer wheel and inner wheel, and accommodated in a concave portion formed in the other one of the inner wheel and outer wheel, and each of the elastic bodies is formed by connecting two or more parts made of different materials.

As a sixth invention, the present invention provides a marine elastic coupling which is configured to transmit power from an engine to a propeller through a plurality of elastic bodies, the elastic coupling comprising an outer wheel whose inner periphery is provided with a plurality of first concave portions; and an inner wheel coaxially supported inside the outer wheel, and whose outer periphery is provided with a plurality of second concave portions corresponding to the plurality of first concave portions, wherein each of the plurality of elastic bodies is accommodated in a space defined by one of the first concave portions and one of the second concave portions opposing each other; each of the concave portions of both the inner and outer wheels has an inclined surface in contact with the accommodated elastic body to press and deform the elastic body; and the inclined surface of each of the concave portions has a deformation region including a deformation end region and a deformation start region, the inclination of the end region being steeper than that of the start region.

As a result, the elastic coupling provides, during high-torque transmission, a sharp increase in the degree of deformation of each elastic body in accordance with the inclination of the inclined surface, thereby sharply increasing the torsional rigidity of the elastic coupling. The term "degree of deformation" as used herein represents the amount of deformation relative to original dimensions.

As a seventh invention, the invention provides a marine elastic coupling which transmits power from an engine to a propeller through a plurality of elastic bodies, the elastic coupling comprising an outer wheel whose inner periphery is provided with a plurality of first concave portions; and an inner wheel coaxially supported inside the outer wheel, and whose outer periphery is provided with a plurality of second concave portions corresponding to the plurality of first concave portions, wherein each of the elastic bodies is accommodated in a space defined by one of the first concave portions and one of the second concave portions opposing each other, and one or more of the elastic bodies are accommodated, in an initial state in which the torque is zero, in spaces with gaps between the elastic bodies and the inner surfaces of the respective concave portions.

As an eighth invention, the invention provides a marine elastic coupling which transmits power from an engine to a propeller through a plurality of elastic bodies, the elastic coupling comprising an outer wheel; and an inner wheel coaxially supported inside the outer wheel, wherein each elastic body is secured to one of the outer wheel and inner wheel, and accommodated in a concave portion formed in the other one of the inner wheel or outer wheel, and wherein one or more of the elastic bodies are accommodated, in an initial state in which the torque is zero, in spaces with gaps between the elastic bodies and the inner surfaces of the respective concave portions.

Each of the gaps is formed by making the diameter of at least one of the plurality of elastic bodies smaller than the diameter of another elastic body. Alternatively, each of the gaps may be formed by making the outside diameter of all the elastic bodies equal, and making the depth of at least one of the first concave portions and the second concave portions different from the depth of another first or second concave portion.

Elastic bodies accommodated in spaces having the gaps may have different elasticities to those of elastic bodies accommodated in spaces without such gaps. The elastic bodies to be accommodated in spaces without the gaps may be subjected to pressure, and then inserted into their respective spaces in a compressed and deformed state. Alternatively, at least one of the elastic bodies to be accommodated in spaces without the gaps may be subjected to pressure, and then inserted into its space in a compressed and deformed state.

The above-defined elastic coupling can be employed in a device comprising an outer wheel integrated concentrically with the flywheel of an engine, and an inner wheel integrated concentrically with the input shaft of a gear.

With the aforementioned configuration according to the invention, when a propeller shaft frequently repeats forward and reverse rotations at low speeds, e.g., when a boat leaves or reaches the shore, the elastic coupling exhibits low torsional rigidity to effectively absorb torque variation. In this way, the elastic coupling reduces the noise generated by the reversing gear, etc., thereby providing a comfortable ride. On the other hand, when the boat travels at high speeds, the elastic coupling exhibits higher torsional rigidity to avoid resonance phenomena attributed to torsional vibrations, thereby preventing damage or failure of various components in the drive system.

High torsional rigidities obtained during such high-speed travel may be defined as values near the proportional limit of each of the elastic bodies constituting the elastic coupling. This minimizes elastic deformation of the elastic bodies when the torsional rigidity of the elastic coupling is high. Consequently, the torsional rigidity of the elastic coupling can be increased to lower the vibration-absorbing capability of the elastic bodies during high-torque transmission, so as to further avoid such resonance phenomena.

The above-described effects can be ensured by making the torsional rigidity during high-torque transmission not less than 100 times greater than that of the torsional rigidity during low-torque transmission. In particular, the torsional rigidity during high-torque transmission may be 300 times greater than the torsional rigidity during low-torque transmission. This significantly reduces the vibration-absorbing capability of the elastic bodies during high-torque rotation, so as to effectively avoid resonance phenomena.

It is possible to easily control variations of the torsional rigidity of the elastic coupling by using rubber-material bodies as the elastic bodies, adjusting the dimensional relationship between these elastic bodies and both the inner and outer wheels in which the elastic bodies are accommodated, and making the elastic bodies have different elasticities by choice of the rubber materials. When an elastic body of a single kind of rubber material includes a hard material accommodated therein, the thickness of the elastic block upon elastic deformation is thin, causing an abrupt change in elasticity after the deformation of the elastic portion. Consequently, the elastic coupling provides a high torsional rigidity more reliably during high-speed travel.

The marine elastic coupling according to the invention can be easily employed in a variety of large and small vessels having a reduction and reversing gear.
FIG.1 is a vertical cross section showing the principal part of a marine elastic coupling;
FIG.2 is an exploded perspective view of the elastic coupling part;
FIG.3 is a cross section of the elastic coupling part;
FIG.4 is a diagram for use in illustrating the action of an elastic block accommodated in the elastic coupling;
FIG.5 is a graph showing the relationship between torque and torsional rigidity;
FIG.6 is a cross section showing another exemplary configuration of the elastic coupling;
FIG.7 is a cross section showing a further exemplary configuration of the elastic coupling;
FIG.8 is an enlarged cross section showing the principal part of a still another exemplary configuration of the elastic coupling;
FIG.9 is a cross section showing a still another exemplary configuration of the elastic coupling;
FIG.10 is a cross section showing a still another example of configuration of the elastic coupling;
FIG. 11 is an enlarged cross section showing the principal part of a still another exemplary configuration of the elastic coupling;
FIG.12 is an enlarged perspective view showing an example of a modified elastic block;
FIG.13 is an enlarged vertical cross section for use in illustrating the deformation process of a still another exemplary elastic block;
FIG.14 is a cross section showing an elastic coupling according to another embodiment of the invention;
FIG. 15 is a cross section showing an elastic coupling according to a still another embodiment of the invention;
FIG. 16 is a cross section of the elastic coupling shown in FIG.15 taken along the line XVI-XVI; and
FIG.17 is a graph showing the relationship between the torque and the torsional rigidity of a conventional elastic coupling.

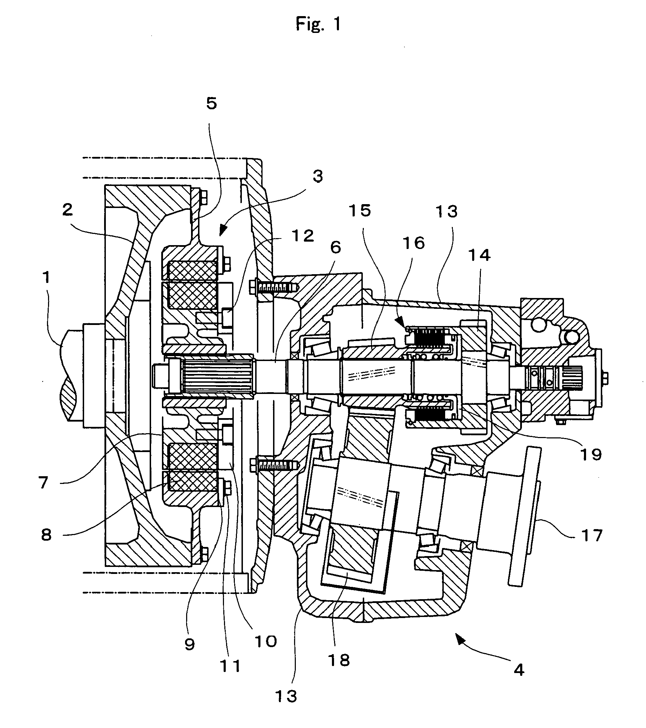

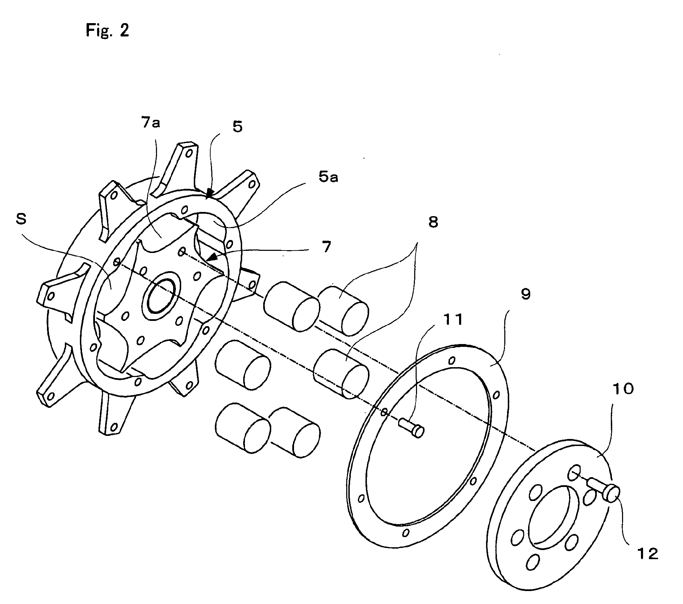

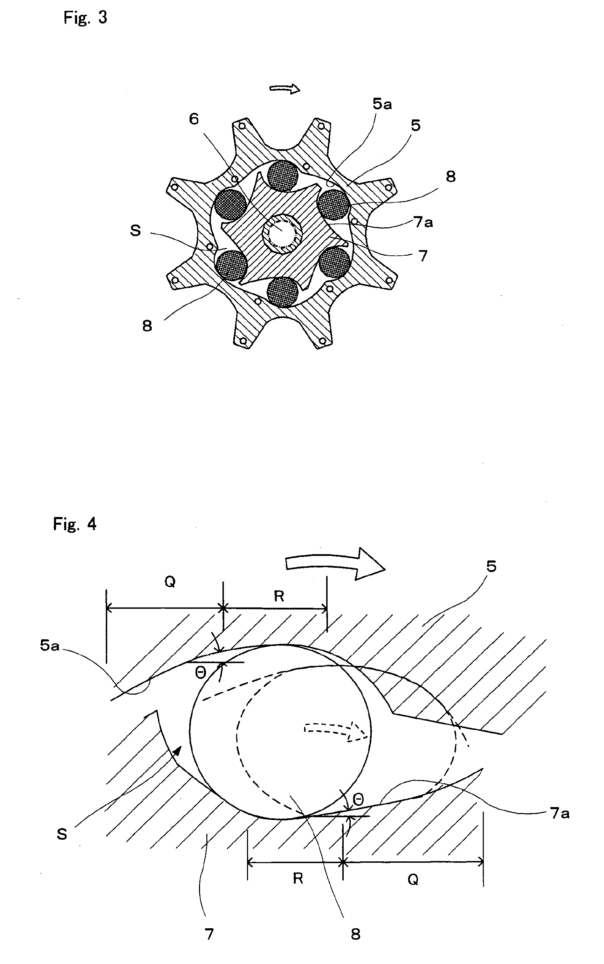

FIG.1 is a vertical cross section showing the principal part of a marine elastic coupling; FIG.2 is an exploded perspective view showing the elastic coupling portion; and FIG.3 is a cross section showing the elastic coupling portion.

Referring to FIG.1, a flywheel 2 is mounted on a drive shaft 1 which is coupled to an engine outside the figure, and an elastic coupling 3 is arranged concentrically with a central portion of the flywheel 2. The elastic coupling 3 is connected to an input shaft 6 of a marine gear 4. Note that the propeller shaft and the propeller are omitted in FIG.1.

The marine gear 4 comprises a casing 13; the input shaft 6 inserted into an opening at one end of the casing 13; a forward housing gear 14 secured to the input shaft 6; a forward pinion gear 15 rotatably fitted over the input shaft 6; a friction clutch 16 disposed between the forward housing gear 14 and the forward pinion gear 15; an output shaft 17 projecting through an opening at another end of the casing 13 and attached to the propeller shaft not shown; and an output gear 18 secured to the output shaft 17 and engaged with the pinion gear 15.

The friction clutch 16 is configured to be engaged by friction when friction plates fixed to the housing gear 14 and the pinion gear 15 are engaged with each other, and are pressed by a hydraulic pusher 19.

Referring to FIG.2 and FIG.3, the elastic coupling 3 of the marine engine drive system comprises an outer wheel 5 fixed to the flywheel 2; an inner wheel 7 joined with the input shaft 6 of the marine gear 4 through a spline; and a plurality of elastic blocks 8 accommodated between the outer wheel 5 and the inner wheel 7. The outer wheel 5 has an inner periphery provided with a plurality of first curved concave portions 5a, and the inner wheel 7 has an outer periphery provided with a plurality of second curved concave portions 7a.

An equal number of the first concave portions 5a and the second concave portions 7a are arranged so that each first concave portion 5a and second concave portion 7a are opposed to each other to define a space S.

The elastic blocks 8 are inserted into each of the respective spaces S. The elastic blocks 8 are each made of a rubber-based material, e.g., a synthetic rubber with good mechanical strength properties, such as NBR or SBR, or a plastic having elasticity, such as hard urethane. The elastic blocks 8 can therefore be made into a columnar roll shape, as shown in the drawings.

Moreover, seal members 9, 10 having an annular shape are removably secured onto a side surface of the outer wheel 5 and the inner wheel 7, respectively, through bolts 11, 12, so as to prevent the elastic blocks 8 from falling out. In the example shown in the drawings, the seal member 10 secured onto the inner wheel 7 also serves as an additional-mass element. Adjusting the number of additional-mass elements constituting the seal member 10 enables adjustment of the moment of inertia.

When one of the first concave portions 5a formed in the inner surface of the outer wheel 5 and one of the second concave portions 7a formed in the outer surface of the inner wheel 7 are opposed to each other to define a space S, these have inclined surfaces opposing each other, as shown in FIG.3.

An elastic block 8 is inserted between these opposing inclined surfaces. Rotation of the flywheel 2 is transmitted from the outer wheel 5 to the inner wheel 7 via the elastic blocks 8.

That is, as shown in the enlarged view of FIG. 4, when the flywheel 2 rotates in the direction of an arrow, the outer wheel 5 simultaneously rotates, causing the outer surface of the elastic block 8 to be pushed and roll along the inclined surface of the first concave portion 5a. The inclined surfaces of the first concave portion 5a and the second concave portion 7a are positioned relative to each other so that the distance between them gradually decreases. Therefore, the block 8 moves into a narrower space between the opposing inclined surfaces, as indicated by the dotted line, as it transmits a greater torque. The block 8 thus undergoes substantial elastic deformation due to shear force while transmitting power to the inclined surface of the second concave portion 7a, thereby causing rotation of the inner wheel 7 by a circumferential pressing force.

The inclined surface of each of the first concave portions 5a and second concave portions 7a has a deformation region including a deformation start region R and a deformation end region Q, wherein the angle of inclination θ of the end region Q is greater than that of the start region R.

Accordingly, when the torque transmitted from the flywheel 2 is small, the force applied from the inclined surface of the first concave portion 5a to the elastic block 8 is also small.

This results in little deformation of the elastic block 8 with a large residual spring elasticity. The elastic block 8 therefore exhibit an excellent shock-absorbing effect, so as to absorb torque variations between the inner wheel 5 and the outer wheel 7. That is, the deformation start region R functions as a low-rigidity element.

Conversely, as the torque increases, the outer wheel 5 tries to move a great distance in the direction of the arrow relative to the inner wheel 7, causing the elastic block 8 to move toward the deformation end region Q and deform strongly, not only by shear force but also by compressive force.

This means that the greater the torque transmitted by the elastic block 8, the stronger the deformation of the elastic block 8.

This change in shape causes a sharp increase in the torsional rigidity of the elastic coupling 3 in accordance with the transmitted torque. That is, the deformation end region Q functions as a high-rigidity element.

Consequently, the increased torsional rigidity results in reduced resonance during rotation at high torque.

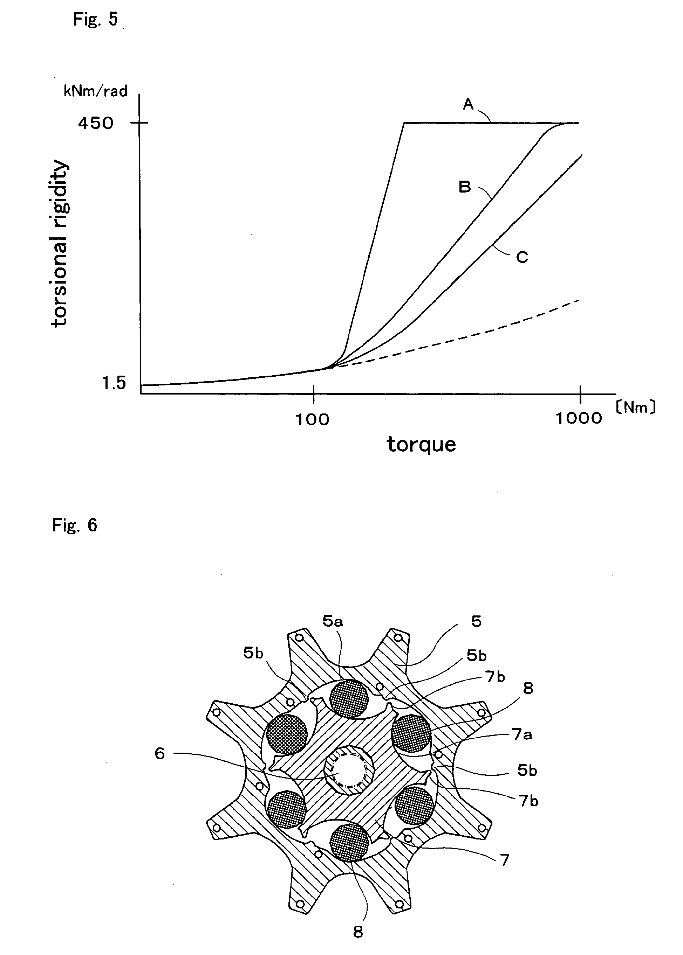

FIG.5 is a graph showing the correlation between torque (Nm) and torsional rigidity (kNm/rad) in this embodiment. When the torque is small in the range of 0 to 100-plus Nm during the deformation start region R, i.e., low-speed travel and the like, the increase in the torsional rigidity is as small as slightly over 1. 5 kNm/rad. However, as the torque exceeds 100 Nm, and goes beyond 200 Nm, the compressive force applied to the elastic block 8 sharply increases by the interaction between the inclined surface of each first concave portion 5a and the angle of inclination θ of each second concave portion 7a, resulting in higher increases in the torsional rigidities of elastic couplings 3 as indicated by the solid lines A, B and C, respectively, as shown in the graph. During high-torque transmission, the increase in torsional rigidity is preferably not less than 30 times greater than the torsional rigidity during low-torque transmission.

Then, when the torque exceeds about 300 Nm, the elastic block 8 is deformed to an extent near its proportional limit. At this point, the torsional rigidity of the elastic coupling 3 is increased to its upper limit. The maximum torsional rigidity shown in the graph is 450 kNm/rad as indicated by the solid line A, which is sufficient to almost completely cancel resonance phenomena attributed to the elasticity of the elastic coupling. With the lower torsional rigidities as indicated by the solid lines B and C, the resonance phenomena can also be effectively cancelled, as compared with a conventional elastic coupling indicated by the dotted line.

The inclined surfaces of the first concave portions 5a and the second concave portions 7a may alternatively be configured as shown in FIG.6, so as to deform the elastic blocks 8 in the aforementioned embodiment by shearing and compressive forces.

Portions of the respective surfaces of each of the first concave portions 5a and the second concave portions 7a on the compression end region are made to rise more abruptly, so that each of the elastic blocks 8 is ultimately positioned between these rising surfaces 5b and 7b. In this configuration, the elastic blocks 8, which are gradually compressed and deformed by the inclined surfaces, ultimately undergo deformations due to simultaneous shearing and compressive forces. As a result, the torsional rigidity of the entire elastic coupling 3 is remarkably improved by the deformed elastic blocks 8.

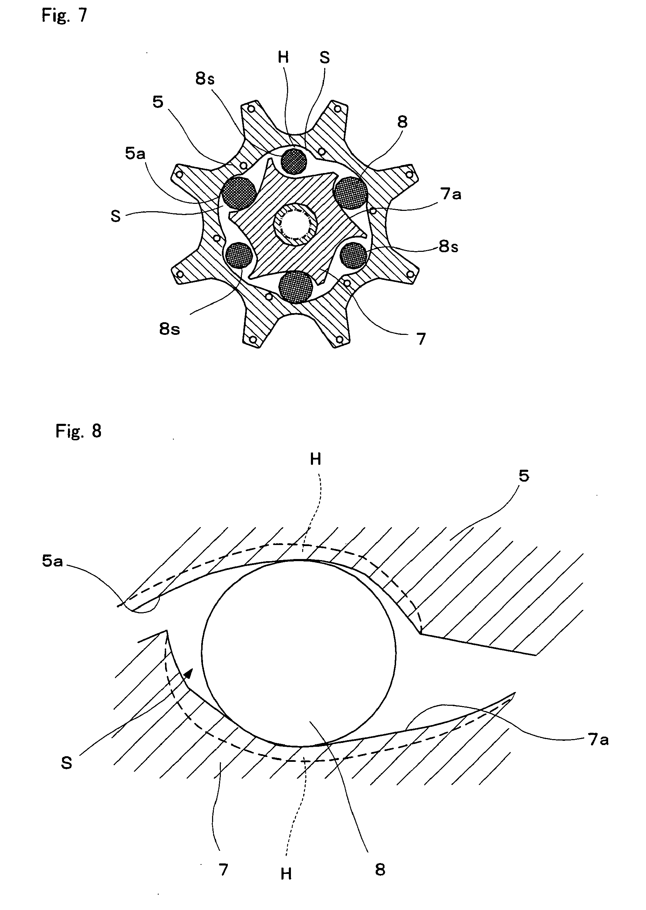

FIG.7 shows another exemplary configuration for achieving a sharp increase in torsional rigidity when the torque exceeds a certain value. That is, elastic blocks 8s which have a gap H between the outer periphery thereof and the interior walls of the respective space S may be provided.

In this configuration, only the elastic blocks 8 without gaps H between them and the interior walls of the spaces S are initially compressed, so that the increase in the torsional rigidity of the elastic coupling 3 is kept low. However, after deformation has progressed to some extent, the other elastic blocks 8s, which have lost the gaps between them and the spaces S, start to deform by compression. This allows an abrupt increase in the torsional rigidity. That is, the elastic blocks 8 without gaps H function as low-rigidity elements, and the elastic blocks 8s with gaps H function as high-rigidity elements.

As shown in FIG. 7, the gaps may be formed by making the shape and dimensions of the first concave portions 5a and the second concave portions 7a defining the spaces S equal, and making the diameter of some of the elastic blocks 8 smaller.

Conversely, the gaps may be formed as follows: the diameter of all the elastic blocks 8 may be made equal, and a first concave portion 5a and a second concave portion 7a maybe cut deeply inward, as indicated by the dotted lines in FIG.8, so that the extent of the cuts results in a space H.

When, in this case, the elastic blocks 8s having gaps H between them and the inner surfaces of their spaces S have a different elasticity to that of the elastic blocks 8 without gaps, the torsional rigidity of the elastic coupling 3 can be controlled in various manners. For example, the torsional rigidity can be increased more sharply by making the elasticity of the elastic blocks 8 with gaps H lower than that of the other elastic blocks 8, whereas the torsional rigidity can be increased smoothly in the opposite manner.

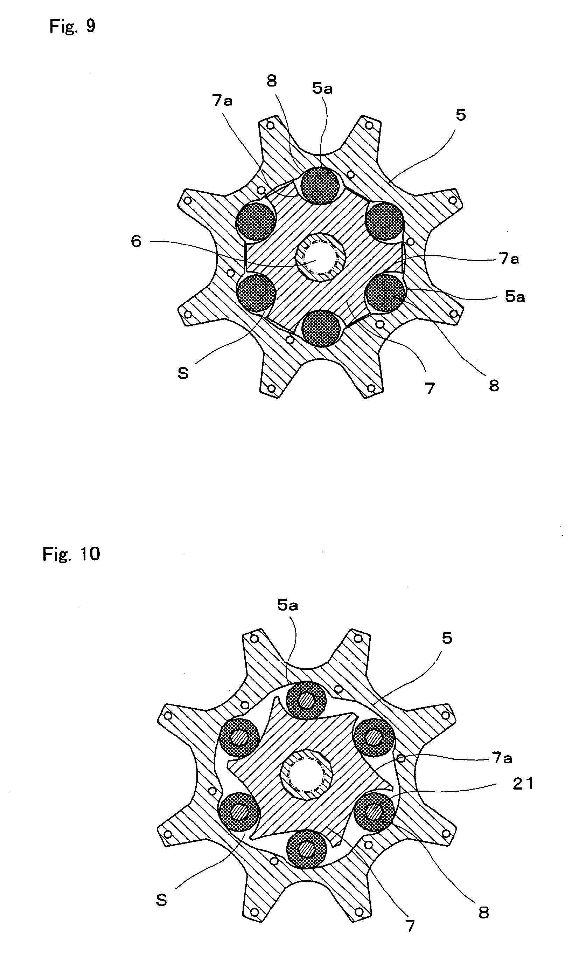

FIG. 9 shows still another exemplary configuration, wherein each of the first concave portions 5a and second concave portions 7a has a half-oval shape. This allows the deformation of each elastic body in the deformation end region Q to be abruptly increased.

In each of the aforementioned exemplary configurations, elastic blocks 8 having a larger outer diameter than that of the spaces S may be used. These blocks are subjected to pressure so as to be pressfit into the spaces S in a compressed and deformed state.

In this case, a high torsional rigidity is obtained at a relatively early stage by an initial compressive force.

FIG. 10 shows yet another exemplary configuration for increasing torsional rigidity, wherein hard material members 21 are embedded in elastic blocks 8. In this configuration, the hard material members 21 exhibit torsional rigidity after the deformation of the peripheral elastic blocks 8, thus resulting in a higher increase in the torsional rigidity of the elastic coupling 3. That is, the peripheral elastic blocks 8 function as low-rigidity elements, and the hard material members 21 function as high-rigidity elements.

As with the elastic blocks 8, the hard material members 21 are molded to a columnar roll shape, and provided concentrically in the elastic blocks 8.

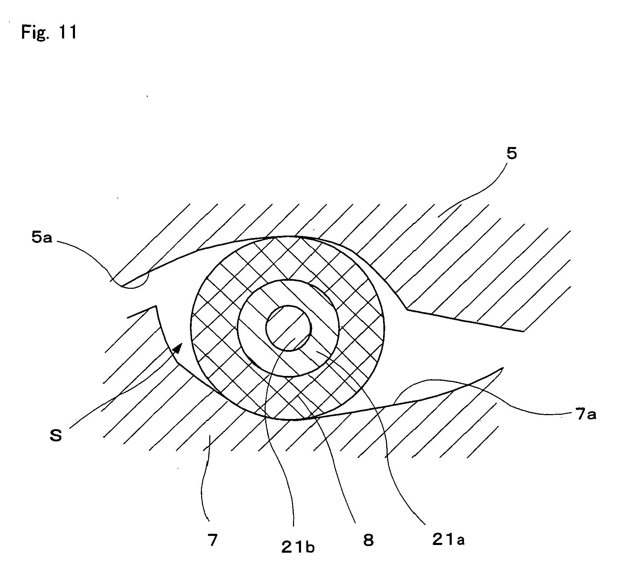

Useful materials for the hard material members 21 include hard rubbers, engineering plastics, metals, and the like. Also, hard material members 21 having different diameters may be used. Moreover, as shown in FIG.11, two or more kinds of hard material members 21a and 21b differing in rigidity may be used as hard material members. These materials may be arranged with the harder material being positioned closer to the center as a core material, so that the torsional rigidity abruptly increases according to the material rigidities.

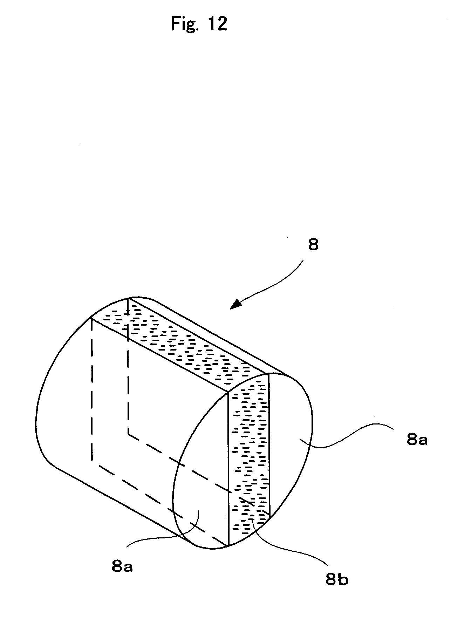

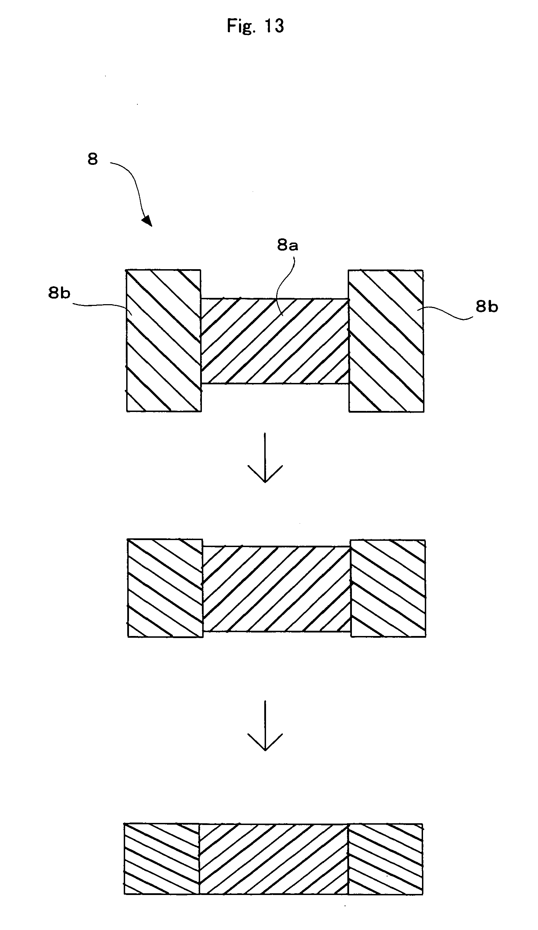

The elastic blocks 8 may also be formed by methods other than those described above. One of such methods, for example, is connecting two or more parts made of different materials. For example, as shown in FIG. 12 and FIG.13, an elastic block 8 may be formed by connecting a first part 8a of an elastic material and a second part 8b of a different elastic material softer than that of the first part 8a. In this case, the softer second material 8b deforms during low-speed travel (i.e., low-torque transmission) to keep the torsional rigidity of the elastic coupling low, while the first part 8a made of the harder elastic material deforms during high-speed travel (i.e., high-torque transmission) to abruptly increase the torsional rigidity. It will be clearly understood by those skilled in the art that a variety of combinations of parts made of materials having different degrees of deformation are possible without departing from the scope of the invention.

When elastic blocks 8 comprising materials having different degrees of elastic deformation are used as described above, it is possible to vary the combination of such materials according to the magnitude of necessary torque, the natural frequency of each component in the transmission system and the like. This allows an increase in the torsional rigidity to be determined as desired.

The elastic coupling 3 may be comprised of a rubber material only; a rubber material and a hard material member 21 embedded in the rubber material; a rubber material and hard material members 21 having different diameters embedded in the rubber material; a rubber material and hard material members 21 having different hardnesses embedded in the rubber material; a rubber material and two layers of a hard material member 21 embedded in the rubber material; a rubber material and two layers of hard material members 21 having different hardnesses mounted in the rubber material; etc. Parts for forming the elastic coupling 3 may be combined as desired so as to determine the torsional rigidity of the elastic coupling 3.

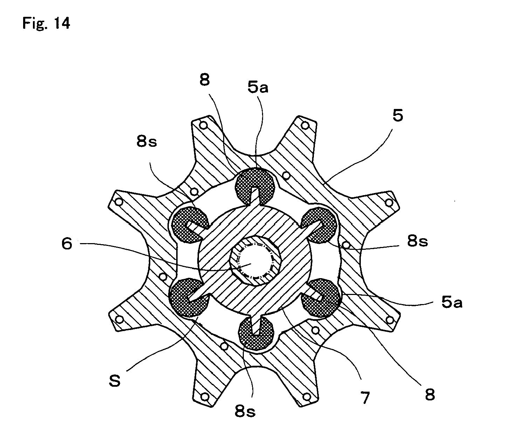

In each of the aforementioned embodiments, the elastic bodies are accommodated in the concave portions provided in both the inner wheel and the outer wheel. However, as shown in FIG. 14, elastic bodies 8 and 8s may be secured to an inner wheel 7, and accommodated in concave portions 5a provided in the inner peripheral surface of an outer wheel 5.

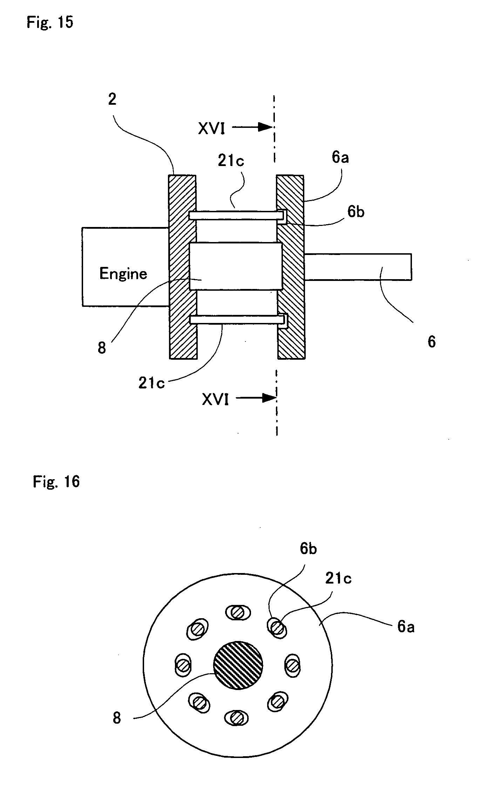

In each of the aforementioned embodiments, the elastic bodies are accommodated in the concave portions provided either in the inner or outer wheel. However, elastic bodies constituting an elastic coupling may not necessarily be accommodated in such concave portions, as shown in the example of FIG. 15. The elastic coupling according to a still another embodiment as shown in FIG.15 is now described. An elastic body 8 is secured between a flywheel 2 and a disk 6a engaged with an input shaft 6 of a marine gear. A plurality of hard rods 21c are equally spaced around the elastic body 8. The hard rods 21c, which are secured to the flywheel 2 but are not secured to the disk 6a, are fitted into slots 6b having a gap of a certain size, as shown in the cross section of FIG.16. Accordingly, the elastic body 8 functions as a low-rigidity element when the torque is low, and the hard rods 21c function as high-rigidity elements when the torque is high.

As described above, the elastic coupling for use in a marine engine according to the invention provides, during low-torque transmission, a low torsional rigidity using the low-rigidity element while providing, during high-torque transmission, e.g., high-speed travel, a very high torsional rigidity using the high-rigidity element. This effectively reduces gear noise caused by torque variations when the torque is low, while effectively avoiding resonance phenomena of various components in the transmission mechanism when the torque is high.

## Claims

1. An elastic coupling configured to transmit power from an engine to a propeller through one or a plurality of elastic bodies, the elastic coupling comprising:
at least one low-rigidity element providing torsional rigidity during transmission of a predetermined low torque; and
at least one high-rigidity element providing, during transmission of a predetermined high torque, torsional rigidity higher than the torsional rigidity provided by the low-rigidity element.

2. The marine elastic coupling according to claim 1, configured such that the torsional rigidity thereof increases with increasing torque, wherein
the increase in the torsional rigidity provided by the high-rigidity element is not less than 30 times greater than the increase in torsional rigidity provided by the low-rigidity element.

3. The marine elastic coupling according to claim 1, wherein the high-rigidity element is configured such that the torsional rigidity of the elastic coupling increases, during transmission of the high torque, to near the proportional limit of the elastic body.

4. The marine elastic coupling according to claim 1, wherein the torsional rigidity during transmission of the high torque is set to not less than 100 times greater than the torsional rigidity during transmission of the low torque.

5. A marine elastic coupling which is configured to transmit power from an engine to a propeller through a plurality of elastic bodies, the elastic coupling comprising:
an outer wheel whose inner periphery is provided with a plurality of first concave portions; and
an inner wheel coaxially supported inside the outer wheel, and whose outer periphery is provided with a plurality of second concave portions corresponding to the plurality of first concave portions, wherein
each of the elastic bodies is accommodated in a space defined by one of the first concave portions and one of the second concave portions opposing each other, and
at least one of the elastic bodies includes a hard material member embedded therein.

6. A marine elastic coupling configured to transmit power from an engine to a propeller through a plurality of elastic bodies, the elastic coupling comprising:
an outer wheel; and
an inner wheel coaxially supported inside the outer wheel, wherein
each elastic body is secured to one of the outer wheel and inner wheel, and accommodated in a concave portion formed in the other one of the inner wheel and outer wheel, and
at least one of the elastic bodies includes a hard material member embedded therein.

7. The marine elastic coupling according to claim 5 or 6, wherein the hard material member of at least one of the elastic bodies has an outside diameter different from that of a hard material member of another elastic body.

8. The marine elastic coupling according to claim 5 or 6, wherein two or more hard material members differing in rigidity are embedded concentrically inside each of the elastic bodies.

9. A marine elastic coupling configured to transmit power from an engine to a propeller through a plurality of elastic bodies, the elastic coupling comprising:
an outer wheel whose inner periphery is provided with a plurality of first concave portions; and
an inner wheel coaxially supported inside the outer wheel, and whose outer periphery is provided with a plurality of second concave portions corresponding to the plurality of first concave portions, wherein
each of the elastic bodies is accommodated in a space defined by one of the first concave portions and one of the second concave portions opposing each other, and is formed by connecting two or more parts made of different materials.

10. A marine elastic coupling configured to transmit power from an engine to a propeller through a plurality of elastic bodies, the elastic coupling comprising:
an outer wheel; and
an inner wheel coaxially supported inside the outer wheel, wherein
each elastic body is secured to one of the outer wheel and inner wheel, and accommodated in a concave portion formed in the other one of the inner wheel and outer wheel, and
each of the elastic bodies is formed by connecting two or more parts made of different materials.

11. A marine elastic coupling which transmits power from an engine to a propeller through a plurality of elastic bodies, comprising:
an outer wheel whose inner periphery is provided with a plurality of first concave portions;
an inner wheel coaxially supported inside the outer wheel, and whose outer periphery is provided with a plurality of second concave portions corresponding to the plurality of first concave portions, wherein
each of the plurality of elastic bodies is accommodated in a space defined by one of the first concave portion and one of the second concave portions opposing each other,
each of the concave portions of both the inner and outer wheels has an inclined surface in contact with the accommodated elastic body to press and deform the elastic body, and
the inclined surface of each of the concave portions has a deformation region including a deformation end region and a deformation start region, the inclination of the end region being steeper than that of the start region.

12. A marine elastic coupling which transmits power from an engine to a propeller through a plurality of elastic bodies, comprising:
an outer wheel whose inner periphery is provided with a plurality of first concave portions; and
an inner wheel coaxially supported inside the outer wheel, and whose outer periphery is provided with a plurality of second concave portions corresponding to the plurality of first concave portions, wherein
each of the elastic bodies is accommodated in a space defined by one of the first concave portions and one of the second concave portions opposing each other, and
one or more of the elastic bodies are accommodated, in an initial state in which the torque is zero, in spaces with gaps between the elastic bodies and the inner surfaces of the respective concave portions.

13. A marine elastic coupling which transmits power from an engine to a propeller through a plurality of elastic bodies, comprising:
an outer wheel; and
an inner wheel coaxially supported inside the outer wheel, wherein
each elastic body is secured to one of the outer wheel and inner wheel, and accommodated in a concave portion formed in the other one of the inner wheel or outer wheel, and
one or more of the elastic bodies are accommodated, in an initial state in which the torque is zero, in spaces with gaps between the elastic bodies and the inner surfaces of the respective concave portions.

14. The marine elastic coupling according to claim 12 or 13, wherein all the concave portions have an inner contour of the same shape and same size, while some of the elastic bodies are formed so that the diameter thereof is smaller than that of other elastic bodies.

15. The marine elastic coupling according to claim 12 or 13, wherein all the elastic bodies have the same size, while some of the concave portions have a depth different from that of other concave portions.

16. The marine elastic coupling according to claim 12 or 13, wherein at least one of the elastic bodies accommodated in a space without the gap is inserted in the space in a compressed and deformed state.

17. The marine elastic coupling according to claim 12 or 13, wherein at least one of the elastic bodies accommodated in a space with the gap has an elasticity different from that of an elastic body accommodated in a space without the gap.
